# EUROPEAN PATENT SPECIFICATION

(11) **EP 1 398 614 B1**
(45) Date of publication and mention of the grant of the patent: **29.03.2006**
(21) Application number: 03017402.3
(22) Date of filing: 31.07.2003
(51) Int. Cl.: G01N 1/34, B01L 3/00, H01J 49/04

(54) **Apparatus and method for sample preparation and direct spotting of eluants onto a maldi-tof target**
Vorrichtung und Verfahren zur Probenvorbereitung und Direkt spotting von Eluenten auf einen Maldi-Tof-Ziel
Appareil et méthode pour la preparation d'echantillons et le spotting direct d'éluant sur cibles maldi-tof

(30) Priority: 13.09.2002 US 243560
(43) Date of publication of application: 17.03.2004
(73) Proprietor: MILLIPORE CORPORATION, Billerica, Massachusetts 01821-3405 (US)
(72) Inventor: Chernokalskaya. Elena, Lexington, Massachusetts 02420 (US); Clark, Phillip, Wakefield, Massachusetts 01880 (US); Kopaciewicz, William, West Newbury, Massachusetts 01985 (US)
(74) Representative: Henkel, Feiler & Hänzel

(56) References cited:
- EP-A- 1 262 759
- WO-A-01/19520
- FR-A- 2 839 458
- US-A- 6 159 368

## Description

### BACKGROUND OF THE INVENTION

Matrix-assisted laser desorption/ionization (MALDI) analysis is a useful tool for solving structural problems in biochemistry, immunology, genetics and biology. Samples are ionized and a time of flight (TOF) analyzer is used to measure ion masses. TOF analysis begins when ions are formed and are accelerated to a constant kinetic energy as they enter a drift region. They arrive at a detector following flight times that are proportional to the square root of their masses. A mass spectrum is created because ions of different mass arrive at the detector at different times.

Mass spectrometry can be a particularly powerful tool in the fields of drug discovery and development, genotyping, and proteome research. Current trends in research are to analyze larger and larger numbers of samples using automated handling equipment or robotics. Quantities of individual samples are from the hano-mole levels to atto-mole levels. As a result, instrumentation is becoming more sensitive and a need exists for sample handling formats to be miniaturized, high density and disposable.

Sample preparation prior to analysis (such as by MALDI TOF MS) often involves desalting and concentration of samples (e.g., peptides) down to a 1-2 microliter volume. These volumes are likely to decrease to nanoliter volumes in time. Simultaneous preparation and analysis of multiple samples is often desirable. Multiwell plates have been developed for simultaneous assay, typically consisting of 96, 384 or 1536 reaction vessels or wells per plate.

Certain sample preparation devices, such as the ZipTip® device commercially available from Millipore Corporation, are excellent tools for sample preparation prior to MALDI analysis. They are a single sample processor that can be used to spot sample onto the MALDI target manually or by automated equipment. More specifically, U.S. Patent Nos. 6,048,457 and 6,200,474 teach the formation of cast membrane structures for sample preparation that are formed by phase inversion of a particle loaded polymer system at the housing orifice. The polymer is precipitated when the housing (containing the soluble polymer/particle lacquer) is immersed in a precipitation bath (typically water). The insertion creates a slight liquid pressure across the lacquer such that the water intrudes upon the polymer creating an open sponge-like structure upon precipitation. However, at the polymer-water interface on the structure there is a semipermiable membrane film that creates a high resistance to flow. When this barrier is either abraded of cut off, the resulting structure is highly permeable. The resulting device is designed to allow flow under the low differential pressures generated by a common 10 microliter hand-held pipettor (e.g. Gilson, Pipetman).

For high throughput sample processing, it would be desirable to use multiwell plates for sample handling and preparation, such as the removal of undesired salts and biochemical substances to improve the resolution and sensitivity of the mass spectrum. However, evaporation of elution solvent can be problematic. The protein and peptides need to be in as small a volume as possible to obtain an adequate MALDI TOF mass spectrum. Collection of the elution volume by centrifugation is possible but difficult, since the volume in each well may vary due to rapid evaporation during transfer of the multiwell plate to the centrifuge and especially during centrifugation. Also, eluants conventionally collected by vacuum methods tend to evaporate rapidly under negative pressure, thus requiring resuspension. Moreover, every time the sample is transferred, such as from pipette to collection plate, or is resuspended, sample is lost to due adherence to the interfaces of these devices. Since sample amounts are typically in the femotmole range, sample losses are unacceptable. Furthermore, centrifugation is also not amenable to automation, as the plate must be manually placed and removed into and from the centrifuge.

A key to achieving high sensitivity and strong MALDI signals is by eluting the bound peptides in as high a concentration as possible. This can be accomplished by using minimum elution volume and reducing handling steps.

It would be highly desirable to use the microtiter plate format for parallel sample preparation that is readily adaptable to automation.

It is therefore an object of the present invention to provide a device and method for spotting of a small volume of eluant directly from the sample preparation device onto a MALDI target.

It is a further object of the present invention to provide a device and method for direct eluant spotting of relatively high concentrations of sample onto a MALDI target.

These and other objects will become apparent by the following description.

### SUMMARY OF THE INVENTION

The problems of the prior art have been overcome by the present invention, which provides a single- or multi-well sample preparation apparatus and method for desalting, concentrating and depositing samples prior to further analysis such as by MALDI TOF mass spectrometry. More specifically, the apparatus in accordance with an embodiment of the present invention includes a plurality of wells each in fluid communication with a respective outlet or drainage opening, optionally containing a three dimensional membrane structure preferably comprising a plurality of sorptive particles entrapped in a porous polymer matrix so as to form a device capable of carrying out solid phase extraction. The apparatus is designed to allow for direct spotting onto a MALDI target, thereby eliminating a transfer step.

The present invention is also directed towards a method of sample preparation, deposition and analysis using the apparatus of the present invention.

### BRIEF DESCRIPTION OF THE DRAWINGS

Figure 1 is a perspective view of a single well of a multi-well device, with the composite structure shown in expansion in Detail A;
Figures 2A, 2B, 2C and 2D show four steps of the elution and transfer process in accordance with the present invention;
Figure 3 is a graph comparing % sequence coverage in various elution techniques;
Figure 4A is a spectrum of a β-galactosidase sample eluted into a microtiter plate using vacuum in accordance with the prior art;
Figure 4B is a spectrum of a ß-galactosidase sample eluted using centrifugation in accordance with the prior art;
Figure 4C is a spectrum of a ß-galactosidase sample eluted directly onto a MALDI target in accordance with the present invention; and
Figure 5 is a cross-sectional view of a well positioned over a MALDI-TOF target substrate and coupled to a vacuum manifold in accordance with the present invention.

### DETAILED DESCRIPTION OF THE INVENTION

Suitable substrate materials for the sample preparation device of the present invention are not particularly limited, and include plastics (such as polyethylene and polypropylene), glass and metal, such as stainless steel. The substrate materials should not interfere with the operation of the device or the chemicals to be used in the procedure. Polyolefins, and particularly polypropylene, are preferred materials.

The term "membrane" as used herein includes permeable and semi-permeable three dimensional structures with or without particles, having a porosity suitable for the desired application.

The term "composite structure" as used herein includes filled membranes.

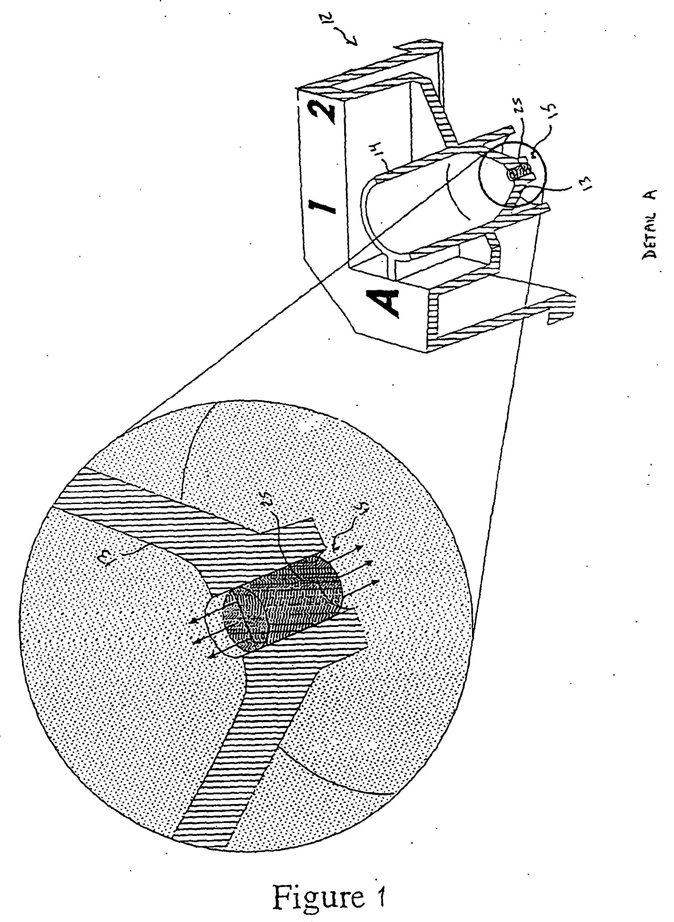

Turning now to Figure 1, there is shown a single well 12 of a sample preparation device that has a plurality of wells, such as 384. A well 12 is defined by a vertically extending fluid impervious side wall 14 and a sloping bottom portion 13. The middle and upper portions of the well 12 preferably have a uniform diameter and are substantially cylindrical in cross-section, although other configurations are contemplated and within the scope of the present invention. The lower portion of the well 12 preferably tapers downwardly, in the direction of fluid flow, towards a bottom portion 13, which slopes inwardly towards a center, thereby having a frusto-conical configuration. Bottom portion 13 has a spout 15 that is preferably centrally located in the well. As best seen in Detail A of Figure 1, the spout 15 is a bore, preferably cylindrical and axially aligned with the central longitudinal axis of the well 12. The dimensions of the bore determine the dimensions of the membrane structure contained therein, which determine, in part, the characteristics of the droplets that form upon flow through the membrane structure. Suitable bore diameters include from about 0.2 to about 2mm, more preferably from about 0.4 to about 0.8 mm, with a diameter of 0.5 mm being preferred. Suitable bore heights include from about 0.2 to about 2 mm, with 1 mm being preferred. At least a portion of the spout 15 preferably includes an adsorptive membrane structure 25. Suitable adsorptive membrane structures are cast-in-place polymer bound, particle laden adsorptive membrane structures, such as those comprised of chromatographic beads which have been adhered together with a binder and disclosed in U.S. Patent Nos. 6,048,457 and 6,200,474, the disclosures of which are hereby incorporated by reference. One such preferred structure is a three-dimensional structure comprising a plurality of sorptive particles entrapped in a porous polymer matrix and having an aspect ratio (average diameter to average thickness) of less than about 10, preferably less than about 5. The structure 25 may be coterminous with the bottom of the spout 15, and extends into the body of the spout 15, preferably extending through substantially the entire depth of the spout 15.

Devices in accordance with the present invention may incorporate a plurality of membrane structures having resin materials with different functional groups to fractionate analytes that vary by charge, size, affinity and/or hydrophobicity; alternately, a plurality of devices containing different individual functional membranes may be used in combination to achieve a similar result. Similarly, one or more membranes can be cast in a suitable housing and functionality can be added before or after casting.

Preferably the membrane structure 25 is located at the distal end of the drain 15, and has a volume of about 300 nanoliters. The drain preferably has a small internal diameter, such as about 0.5 millimeters, so that the membrane structure is relatively small and therefore requires less elution volume. In the preferred embodiment where the structure 25 is coterminous with the bottom open end of the spout 15, sample dilution is minimized due to the reduction or absence of deadspace.

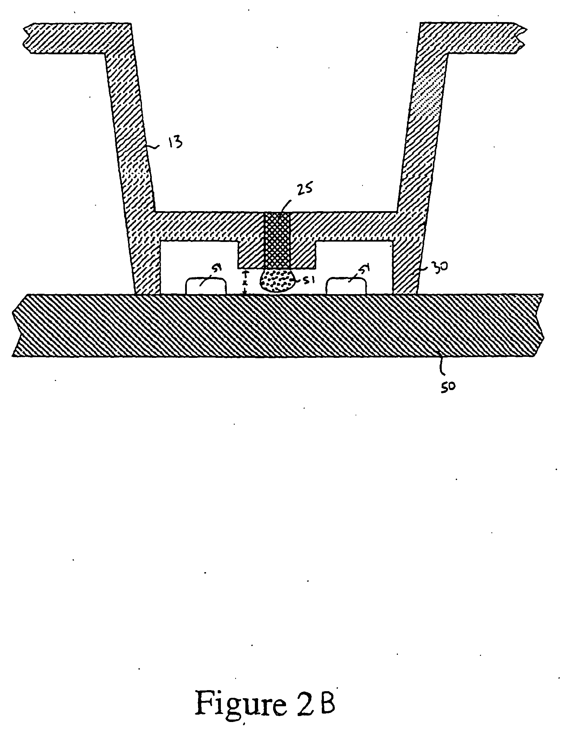

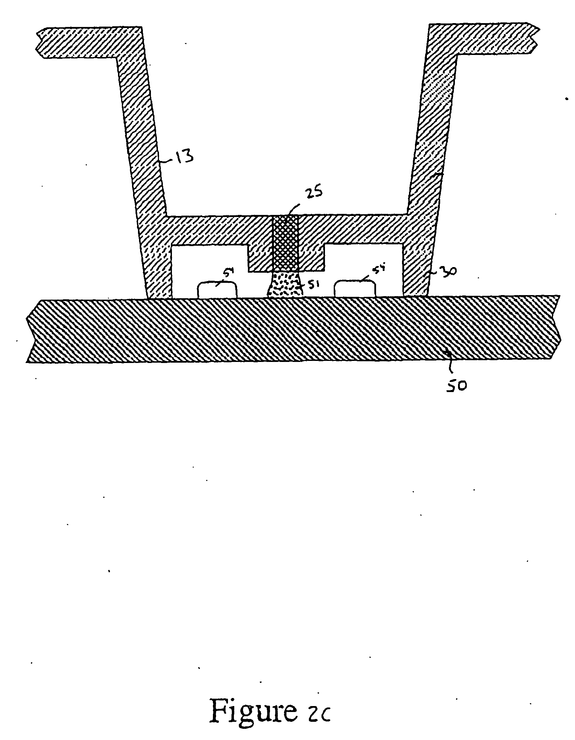

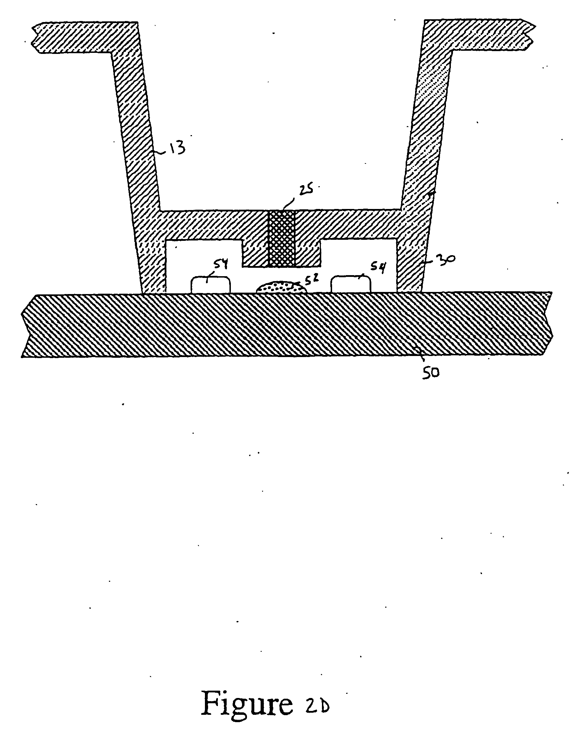

In order to minimize elution volume and deposit the sample (i.e., "spot") efficiently on the target substrate, the spout 15 must be kept in close proximity to the target. A molded stand-off collar or skirt 30 partially or completely circumscribing each spout 15 is formed in the device to support the device on the substrate and maintain a suitable gap or distance "x" between the outlet of the spout 15 and the target surface 50. Preferably this gap is smaller than the diameter of the liquid drop 51 that forms as the eluant transfers from the membrane structure 25 to the target surface 50. Thus, as the drop forms from the spout 15 as shown in Figure 2B, it touches the target surface 50 (Figure 2C) before it releases from the spout 15. When this occurs, there is increased surface tension adhesion on the target surface (due to, for example, the surface area difference and relative hydrophobicity of the target surface) that "pulls" the drop off the spout.. The maximum dimensional offset between the spout outlet and the target surface 50 depends in part on the elution volume and the nature of the elution solution. A suitable gap "x" for a 1 microliter elution is about 0.15 to about 0.020 inches (about 0.5 mm), with a maximum gap of about 0.035 inches. A suitable gap for a 2 microliter elution is from about 0.020 to about 0.030 inches, with a maximum of about 0.05 inches. Gaps exceeding the maximum do not allow for the effective transfer of eluant in a minimum (or a reasonable amount) of volume. If the gap is too small, the transfer will occur, but the spots tend to be large and irregular because the drop does not fully transfer; it fills the gap and can bubble if air flows through the structure. The minimum gap is such that an elution droplet formed contacts the target surface 50 and releases from the spout outlet leaving a gap, so that the elution droplet is not disrupted by air flow through the spout. Once an effective transfer is made, the spots 52 on the target surface dry quickly under negative pressure, as depicted in Figure 2D.

In the embodiment shown, the collar 30 is annular and conveniently defines a volume bounded by the bottom of the well and the target surface 50 that allows vacuum to reach the spout 15. One or more vents 54 are formed in the collar 30 for this purpose. Those skilled in the art will appreciate that posts or other structures could be used to create the gap and ensure that the spout can receive negative pressure.

Suitable substrates or targets are those conventionally used in MALDI TOF mass spectrometry. They are substantially planar, conductive, and are dimensioned to fit in ionization chambers of the MALDI instrument. Metallics such as stainless steel are typical.

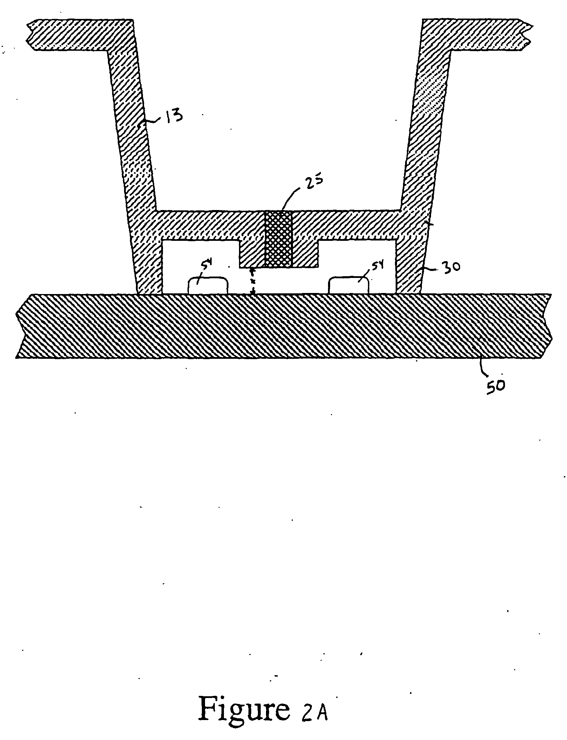

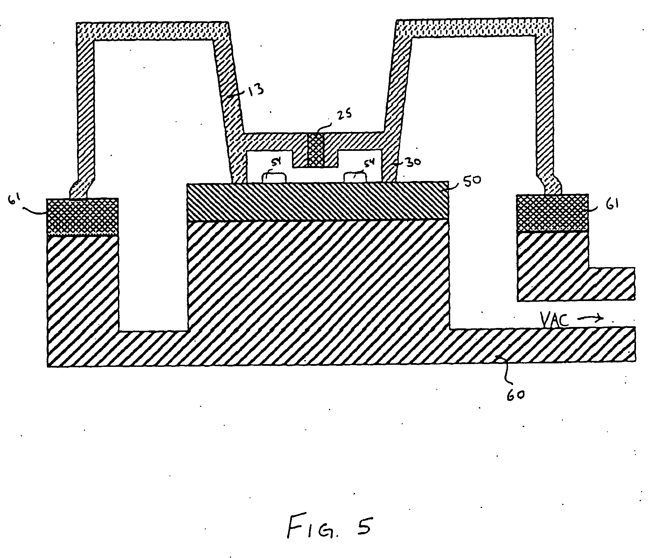

In its method aspects, the present invention utilizes the evaporation problem discussed above as a processing solution, and eliminates a transfer step previously necessary when using conventional methods. To that end, sample is introduced into one or more wells of the multi-well plate by any suitable means, such as by pipetting. The molecules of interest are captured by the membrane structure 25 present in each well. A wash step is optionally carried out. As illustrated in Figures 2A-2C and 5, the plate is positioned on a vacuum manifold 60 (sealed with sealing gasket 61) and over a planar MALDI target substrate, for example, appropriately positioned below the spout outlet. To elute the molecules of interest from the membrane structures, vacuum (preferably about 5 inches Hg) is applied to each well, preferably to create a pressure differential of about 2-6 psi, and an elution solvent (about 1-2 microliters) is introduced into each well. Too high a vacuum tends to cause bubbles or spraying of the elution liquid, yielding poor spotting on the target surface. A suitable elution solvent such as an acetonitrile/matrix mixture, preferably a 50% acetonitrile/0.1% TFA mixture can be used, and vacuum is applied. The elution volume exits the spout 15 and contacts the target positioned beneath the spout and rapidly evaporates on the target, leaving the sample crystals ready for analysis in a convenient array (corresponding to the array of wells 12) such as by MALDI. Since a transfer step is eliminated, losses are minimized and sample processing time is reduced. Crystal formation is excellent, and MALDI signal sensitivity is enhanced.

### EXAMPLE 1

One method of identifying an unknown protein is to digest it with ca. bovine trypsin generating a unique set of peptides. The collective masses of these peptides as determined by mass spectrometry (e.g. MALDI TOF MS) represent a fingerprint that can be searched against a database. The quality of the database match can be assessed by several complex-scoring systems. However, one simple means of scoring is the amount of protein sequence that can be identified by the mass spectrum. This parameter is typically referred to in the field as % sequence coverage or % coverage. In most cases, with a high performance MALDI TOF MS system that is accurate to 50 ppm of a mass unit, it is possible to identify a protein with as little as ca. 12 % of its sequence.

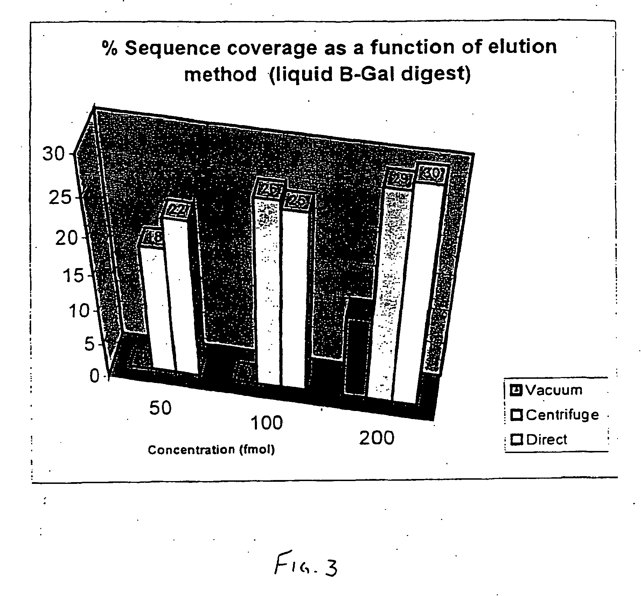

Figure 3 shows the sequence coverage obtained from ß-galactosidase (E. coli) samples (50, 100 and 200 fmol) that were digested with bovine trypsin, transferred to a MALDI TOF MS target by 3 different means and analyzed. For the "vacuum indirect" method, the sample was desorbed from the plate in 15 microliters of volume (50% acetonitrile containing MALDI matrix, e.g. α-cyano-4-hydroxy-cinnamic acid) using a vacuum manifold (at 5 inches Hg) into a 96-well "V" bottom polypropylene microtiter plate. 15 microliters are required to form a sufficiently large drop that can fall off the spout by gravitational force. (Volumes less than this amount typically are held on the spout by surface tension.) From the collected volume (typically 10 microliters or less), two microliters were transferred by pipette to a MALDI TOF MS target and allowed to dry. This method provides acceptable sequence coverage with 200 fmol of sample. However, % coverage is virtually non-existent at lower peptide levels. Improved sensitivity for "indirect" transfer can be achieved by using less eluant volume (ca. 2 microliters). Centrifugal force (ca. 1500 Xg for 15 seconds) must be used to efficiently drive the small volume through the membrane and then the entirety of the collected volume is spotted onto the target. Acceptable % coverage can be obtained on as little as 50 fmol of protein. Although the performance of the method is good, due to the need for centrifugation, it is not suited for automation and would be not be entirely useful for high-throughput analyses.

Direct transfer (or spotting) from the sample preparation device to the MALDI TOF MS target, using vacuum, is preferred because: 1) it eliminates a handling step, 2) requires a minimum volume and 3) is fully automate-able. As can be seen in Figure 3, this method (Vacuum Direct) provides % coverage results comparable to the "centrifuge indirect" method.

### EXAMPLE 2

### Comparative MALDI _TOF MS Spectra of β-Galactosidase Tryptic Peptides

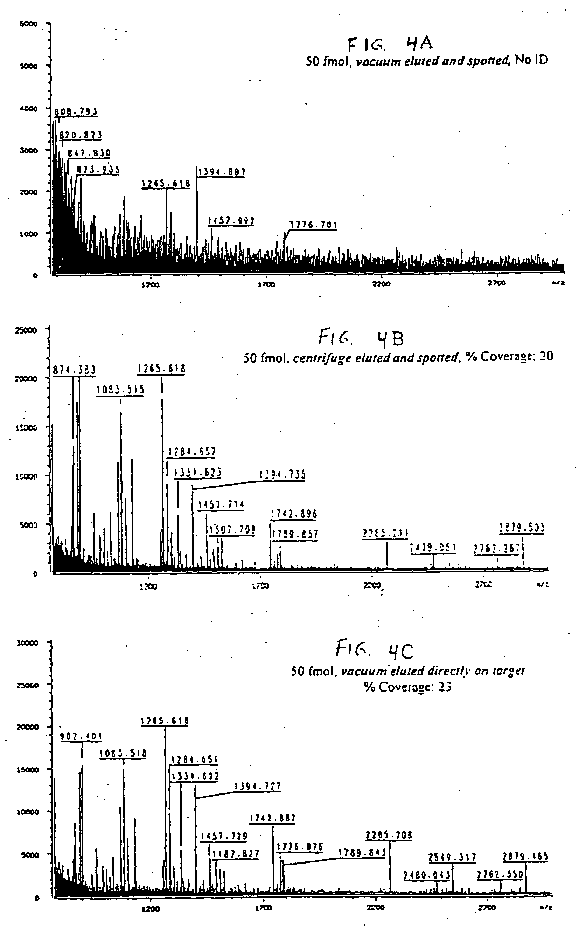

Three 50 fmol samples of β-galactosidase (E. coli) were digested with trypsin, bound to the membrane within the spout and eluted by different methods. Figure 4A is the spectra obtained when the membrane was eluted into a microtiter plate well with 15 microliters of 50% acetonitrile containing MALDI Matrix using vacuum (5 inches Hg) and then spotted (2 microliters) onto a MALDI TOF MS target. Figure 4B was obtained by eluting the membrane with 2 microliters of 50% acetonitrile containing MALDI Matrix using centrifugation (15 seconds @ 1500 Xg) and then spotted (2 microliters). Figure 4C is a spectrum of a well that was eluted/spotted (2 microliters) by vacuum (5 inches Hg) directly onto the MALDI TOF MS target in accordance with the present invention. Figure 4C shows coverage of 23%, compared to 20% using centrifugation and virtually no coverage with indirect vacuum.

## Claims

1. A method for sample preparation, transfer and analysis, comprising:
providing at least one well (12), said at least one well (12) containing a membrane structure (25) for binding molecules of interest, said at least one well (12) comprising a spout (15) having an outlet;
introducing a sample into said at least one well (12) and allowing said molecules of interest to bind to said membrane structure (25) in said at least one well (12);
positioning a substrate (50) beneath said spout outlet;
eluting said molecules of interest from said membrane structure (25) onto said substrate (50); and
analyzing said sample on said substrate (50) by MALDI TOF mas spectrometry.
**characterized in that** said substrate is used as a MALDI Tof tanget substrates

2. The method of claim 1, **characterized by** further comprising subjecting said at least one well (12) to vacuum to carry out said elution.

3. The method of claim 1, **characterized in that** said membrane structure comprises a plurality of sorptive particles entrapped in a porous matrix.

4. The method of claim 1, **characterized by** further comprising providing a plurality of wells (12).

5. The method of claim 1, **characterized in that** said substrate is positioned beneath said at least one well (12) at a predetermined distance to form a gap, devoid of structure, between said outlet and said substrate.

6. The method of claim 5, **characterized in that** said elution causes drops to form on said spout outlet, each said drop having a diameter, and wherein said predetermined distance is less than said diameter.

7. The method of claim 5, **characterized in. that** said predetermined distance is from about 0.381 mm (0.015 inches) to about 0.762 mm (0.030 inches).

8. The method of claim 1, **characterized in that** there are a plurality of wells (12), said outlet is a drain, said substrate is a sample presentation surface, and said molecules of interest are eluted by applying a vacuum to said wells (12).

9. The method of claim 8, **characterized in that** said plurality of wells (12) are positioned over said sample presentation surface a predetermined distance defining a gap between said drain and said sample presentation surface.

10. The method of claim 8, **characterized in that** said elution step causes a droplet to form on said drain, said droplet having a diameter, and wherein said drain is positioned over said sample presentation surface such that a gap less than said diameter is formed between said drain and said surface, whereby said droplet contacts said surface and transfers from said drain to said surface.

11. A sample preparation and presentation combination for preparing and presenting a sample having molecules of interest for analysis, comprising:
a sample preparation device comprising at least one well (12), said at least one well (12) containing a membrane structure (25) for binding said molecules of interest, said at least one well (12) comprising a spout (15) having an outlet and
a vacuum manifold (61) for eluting said bound molecules of interest from said membrane structure to a sample presentation substrate (25)
**characterized in that**
the sample presentation substrate is a MALDI TOF tanget substrate (50) for receiving said eluted molecules of interest and presenting said eluted molecules of interest for MALDI TOF mass spectrometric analysis.

12. The combination of claim 11, **characterized in that** said sample preparation device comprises a plurality of wells (12), each containing a membrane structure for binding said molecules of interest.

13. The combination of claim 12, **characterized in that** said plurality of wells (12) are arranged in an array.

14. The combination of claim 11, **characterized in that** said sample presentation surface is substantially planar.

## Patentansprüche

1. Verfahren für die Vorbereitung, den Transfer und die Analyse von Proben, mit
Bereitstellen mindestens einer Vertiefung (12), wobei die mindestens eine Vertiefung (12) eine Membranenstruktur (25) zum Binden von interessierenden Molekülen enthält, wobei die mindestens eine Vertiefung (12) mindestens einen Trichter (15) mit einem Auslass aufweist;
Einführen einer Probe in die mindestens eine Vertiefung (12) und Ermöglichen, dass Moleküle von Interesse sich mit der Membranenstruktur (25) in der mindestens einen Vertiefung (12) binden;
Positionieren eines Substrats (50) unter dem Trichterauslass;
Eluieren der interessierenden Moleküle von der Membranstruktur (25) auf das Substrat (50); und
Analysieren der Probe auf dem Substrat (50) durch MALDI-TOF-Massenspektroskopie,
**dadurch gekennzeichnet, dass** das Substrat als ein MALDI-TOF-Zielsubstrat verwendet wird.

2. Verfahren gemäß Anspruch 1, ferner **gekennzeichnet durch** Aussetzen der mindestens einen Vertiefung (12) einem Unterdruck, um die Elution auszuführen.

3. Verfahren gemäß Anspruch 1, **dadurch gekennzeichnet, dass** die Membranstruktur eine Mehrzahl von sorptiven Teilchen umfasst, die in einer porösen Matrix eingeschlossen sind.

4. Verfahren gemäß Anspruch 1, ferner **gekennzeichnet durch** Bereitstellen einer Mehrzahl von Vertiefungen (12).

5. Verfahren gemäß Anspruch 1, **dadurch gekennzeichnet, dass** das Substrat unter der mindestens einen Vertiefung (12) an einem vorbestimmten Abstand positioniert ist, um einen Zwischenraum frei von einer Struktur zwischen dem Auslass und dem Substrat zu bilden.

6. Verfahren gemäß Anspruch 5, **dadurch gekennzeichnet, dass** die Elution veranlasst, dass sich Tropfen an dem Trichterauslass bilden, wobei jeder Tropfen einen Durchmesser aufweist, und wobei der vorbestimmte Abstand geringer als der Durchmesser ist.

7. Verfahren gemäß Anspruch 5, **dadurch gekennzeichnet, dass** der vorbestimmte Abstand von etwa 0,381 mm (0,015 Zoll) bis etwa 0,762 mm (0,030 Zoll) ist.

8. Verfahren gemäß Anspruch 1, **dadurch gekennzeichnet, dass** es eine Mehrzahl von Vertiefungen (12) gibt, wobei der Auslass ein Abfluss ist, wobei das Substrat eine Probenpräsentationsoberfläche ist, und die interessierenden Moleküle durch Anlegen eines Unterdrucks an die Vertiefungen (12) eluiert werden.

9. Verfahren gemäß Anspruch 8, **dadurch gekennzeichnet, dass** die Mehrzahl von Vertiefungen (12) über der Probenpräsentationsoberfläche in einen vorbestimmten Abstand positioniert sind, der einen Zwischenraum zwischen dem Abfluss und der Probenpräsentationsoberfläche festlegt.

10. Verfahren gemäß Anspruch 8, **dadurch gekennzeichnet, dass** der Elutionsschritt veranlasst, dass sich ein Tröpfchen an dem Abfluss bildet, wobei das Tröpfchen einen Durchmesser aufweist, und wobei der Abfluss über der Probenpräsentationsoberfläche positioniert wird, so dass ein Zwischenraum geringer als der Durchmesser zwischen dem Abfluss und der Oberfläche gebildet wird, wodurch das Tröpfchen die Oberfläche kontaktiert und sich von dem Abfluss zu der Oberfläche begibt.

11. Probenvorbereitungs- und Präsentationskombination zum Vorbereiten und Präsentieren einer Probe mit interessierenden Molekülen zur Analyse, umfassend:
eine Probenvorbereitungsvorrichtung mit mindestens einer Vertiefung (12), wobei die mindestens eine Vertiefung (12) eine Membranenstruktur (25) zum Binden der interessierenden Moleküle enthält, wobei mindestens eine Vertiefung (12) einen Trichter (15) mit einem Auslass umfasst; und
einen Vakuumverteiler (61) zum Eluieren der interessierenden gebundenen Moleküle von der Membranstruktur zu einem Probenpräsentationssubstrat (25);
**dadurch gekennzeichnet, dass** das Probenpräsentationssubstrat ein MALDI-TOF-Zielsubstrat (50) ist, um die interessierenden, eluierten Moleküle zu empfangen und die interessierenden eluierten Moleküle zur MALDI-TOF-Massenspektrometer-Analyse zu präsentieren.

12. Kombination gemäß Anspruch 11, **dadurch gekennzeichnet, dass** die Probenvorbereitungsvorrichtung eine Mehrzahl von Vertiefungen (12) umfasst, die jeweils eine Membranstruktur zum Binden der interessierenden Moleküle enthalten.

13. Kombination gemäß Anspruch 12, **dadurch gekennzeichnet, dass** die Mehrzahl von Vertiefungen (12) in einem Array angeordnet ist.

14. Kombination gemäß Anspruch 11, **dadurch gekennzeichnet, dass** die Probenpräsentationsoberfläche im Wesentlichen planar ist.

## Revendications

1. Procédé pour la préparation, le transfert et l'analyse d'échantillons, comprenant les étapes consistant à :
fournir au moins un puits (12), ledit au moins un puits (12) contenant une structure de membrane (25) destinée à lier des molécules d'intérêt, ledit au moins un puits (12) comportant un passage d'écoulement (15) ayant une sortie ;
introduire un échantillon dans ledit au moins un puits (12) et laisser lesdites molécules d'intérêt se lier à ladite structure de membrane (25) dans ledit au moins un puits (12) ;
placer un substrat (50) au-dessous de ladite sortie du passage d'écoulement ;
éluer lesdites molécules d'intérêt de ladite structure de membrane (25) en les amenant sur ledit substrat (50) ; et
analyser ledit échantillon sur ledit substrat (50) par spectrométrie de masse MALDI-TOF,
**caractérisé en ce que** ledit substrat est utilisé comme substrat cible de MALDI-TOF.

2. Procédé selon la revendication 1, **caractérisé en ce qu'**il consiste de plus à soumettre ledit au moins un puits (12) à un vide pour effectuer ladite élution.

3. Procédé selon la revendication 1, **caractérisé en ce que** ladite structure de membrane comprend une pluralité de particules sorbantes retenues dans une matrice poreuse.

4. Procédé selon la revendication 1, **caractérisé en ce qu'**il consiste de plus à fournir plusieurs puits (12).

5. Procédé selon la revendication 1, **caractérisé en ce que** ledit substrat est placé au-dessous dudit au moins un puits (12) à une distance prédéterminée pour établir un espace libre, dépourvu de structure, entre ladite sortie et ledit substrat.

6. Procédé selon la revendication 5, **caractérisé en ce que** ladite élution provoque la formation de gouttes sur ladite sortie du passage d'écoulement, chacune de ces gouttes ayant un diamètre, et dans lequel ladite distance prédéterminée est inférieure audit diamètre.

7. Procédé selon la revendication 5, **caractérisé en ce que** ladite distance prédéterminée est d'environ 0,381 mm (0,015 inch) à environ 0,762 mm (0,030 inch).

8. Procédé selon la revendication 1, **caractérisé en ce qu'**il existe plusieurs puits (12), ladite sortie est un tube d'écoulement, ledit substrat est une surface de présentation d'échantillon, et lesdites molécules d'intérêt sont éluées par application d'un vide auxdits puits (12).

9. Procédé selon la revendication 8, **caractérisé en ce que** lesdits plusieurs puits (12) sont disposés au-dessus de ladite surface de présentation d'échantillon à une distance prédéterminée en définissant un espace libre entre ledit tube d'écoulement et ladite surface de présentation d'échantillon.

10. Procédé selon la revendication 8, **caractérisé en ce que** ladite étape d'élution provoque la formation d'une gouttelette sur ledit tube d'écoulement, ladite gouttelette ayant un diamètre, et dans lequel ledit tube d'écoulement est disposé au-dessus de ladite surface de présentation d'échantillon de façon à établir un espace libre plus petit que ledit diamètre entre ledit tube d'écoulement et ladite surface, si bien que ladite gouttelette entre en contact avec ladite surface et passe dudit tube d'écoulement à ladite surface.

11. Ensemble de préparation et de présentation d'échantillon destiné à préparer et présenter un échantillon ayant des molécules d'intérêt pour une analyse, comprenant :
un dispositif de préparation d'échantillon comprenant au moins un puits (12), ledit au moins un puits (12) contenant une structure de membrane (25) destinée à lier lesdites molécules d'intérêt, ledit au moins un puits (12) comprenant un passage d'écoulement (15) ayant une sortie ; et
un distributeur de vide (61) pour éluer lesdites molécules d'intérêt liées de ladite structure de membrane (25) en les amenant à un substrat de présentation d'échantillon ;
**caractérisé en ce que** le substrat de présentation d'échantillon est un substrat cible de MALDI-TOF (50) destiné à recevoir lesdites molécules d'intérêt éluées et à présenter lesdites molécules d'intérêt éluées pour une analyse spectrométrique de masse MALDI-TOF.

12. Ensemble selon la revendication 11, **caractérisé en ce que** ledit dispositif de préparation d'échantillon comprend plusieurs puits (12) contenant chacun une structure de membrane destinée à lier lesdites molécules d'intérêt.

13. Ensemble selon la revendication 12, **caractérisé en ce que** lesdits plusieurs puits (12) sont disposés en une rangée.

14. Ensemble selon la revendication 11, **caractérisé en ce que** ladite surface de présentation d'échantillon est sensiblement plane.
